# EUROPEAN PATENT APPLICATION

(11) **EP 3 553 940 A1**
(43) Date of publication of application: **16.10.2019**
(21) Application number: 18166622.3
(22) Date of filing: 10.04.2018
(51) Int. Cl.: H02P 7/29, H02P 1/18

(54) **A DC ELECTRIC MOTOR HAVING AN INTEGRATED SOFT START CIRCUIT AND A METHOD FOR DRIVING THE SAME**

(71) Applicant: Faz Elektrik Motor Makina Sanayi ve Ticaret A.S., 35050 Izmir (TR)
(72) Inventor: TANER, Osman, 35050 Izmir (TR); KABAKLI, Tarik, 35050 Izmir (TR)
(74) Representative: Sevinç, Erkan

(57) **Abstract**

The present invention relates to a DC electric motor having a housing and an armature rotatably located in said housing, wherein said motor comprises an electronic control circuit having a switching element and a processor in communication with said switching element. Said switching element is adapted to execute commands received from said processor and the processor is adapted to apply a high frequency signal with a low duty cycle ratio to said switching element. Here the processor is adapted to adjust the duty cycle ratio in time such that the rotational speed of said armature may gradually be increased during startup of the DC motor.

## Description

### TECHNICAL FIELD OF THE INVENTION

The invention relates to a direct current electric motor controlled by a modulated signal generated by a processor and provides such a motor with soft-starting function. The DC motors according to the present invention are particularly useful for driving fans used in air conditioning systems of vehicles.

### DESCRIPTION OF THE PRIOR ART

In the prior art, soft-starting function is mostly provided by means attached onto a motor externally. These means have NTC (Negative Temperature Coefficient) thermistors whose operation depends on the temperature. Soft-starting motors start with a limited current via NTC thermistor connected in series. The resistance value of an NTC thermistor is high at the beginning of its operation. Therefore, the current allowed by the NTC thermistor is small and the motor starts with low speed. When current flows through the NTC thermistor, temperature rises and the resistance value of the NTC thermistor lowers resulting in increase in the value of the current fed to the motor and hence the speed of the motor increases. After a certain time, a relay connected to the motor in parallel is closed and the DC motor operates with full speed. This kind of means is added externally to the motors for providing the motors with soft-starting function. However, usually space can hardly be found in AC systems of vehicles.

Another technical problem encountered in the prior art is that the motor loses the ability of soft-starting upon a stop-start process, since the resistance of the NTC thermistor has to be at its starting value for the motor to display soft-starting function. This condition could only be met when NTC thermistors are cooled down and the cooling of said NTC thermistors cannot be provided within such a short time interval.

On the other hand, since the functionality of the NTC thermistors depends on the temperature and thus the NTC thermistors are temperature-dependent components, the motor which the NTC thermistor is attached thereon loses the function of soft-starting in case of the ambient temperature is increased.

US 7,518,837 B2 discloses a control device for soft-starting and protecting overload of a motor in a power tool. The control device comprises a power switch, a varistor, several diodes, several resistors, several capacitors, a relay, a transistor, a triac, and a microcontroller. The microcontroller is embedded with program such that, after the power switch is turned on, the microcontroller generates a smooth soft start voltage to drive the power tool. With the characteristics of power-control device, the voltage sent to motor is increased from low to full range. When the speed of motor is increased from low to the maximum, the microcontroller turns off the power-control device and turns on a relay. However, the disclosed motor of this invention is fed by an AC source, not a DC source.

US 6,351,113 B1 proposes a compact solid state motor starter for controlling the starting and stopping of electrical motors with gated semiconductor devices such as SCRs, thyristors, or generally, solid state power switches. Also said motor comprises thermistors which respond very quickly to temperature changes because of their small inherent material mass. Since the disclosed thermistors are sensitive to change of ambient temperature, it is clear that the disclosed invention possesses the above disclosed disadvantages; and thus it cannot offer a solution to the problems exist in the prior art.

### SUMMARY OF THE INVENTION

The present invention relates to a DC electric motor having a housing and an armature rotatably located in said housing, wherein said motor comprises an electronic control circuit having a switching element and a processor in communication with said switching element. Said switching element is adapted to execute commands received from said processor and the processor is adapted to apply a high frequency signal with a low duty cycle ratio to said switching element. The processor is adapted to adjust the duty cycle ratio in time such that the rotational speed of said armature may gradually be increased during startup of the DC motor.

According to an embodiment of the present invention, the electronic control circuit is embedded within the housing. Also the electronic control circuit comprises one or more protecting diodes for protecting the DC electric motor from high voltage generated by back-emf. The electronic control circuit comprises at least one ripple absorbing component for protecting the electronic control circuit against possible damages which may be generated by spikes occurring on the current applied to the armature. The ripple absorbing component is optionally a varistor.

Said switching element is in electrical connection in between the cathode of the DC electric motor and the cathode of the power supply in series. The mentioned switching element is a semiconductor switching component and it is optionally a MOSFET. The switching element is optionally employed as a DC chopper.

According to an embodiment of the present invention, the electronic control circuit further comprises a voltage regulating component for ensuring nominal voltage feed to the processor. Said electronic control circuit (17) may further comprise at least one inverse voltage protection diode which is in electrical connection in between the positive terminal of a power supply and the voltage regulating component. Optionally, the electronic control circuit thereof comprises an inverse voltage protection diode for protecting the circuitry against voltage abnormalities.

A process for controlling the DC electric motor comprises the steps of establishing electric communication in between a switching element and a processor such that the switching element is able to execute commands received from the processor; applying, via the processor, a high frequency signal with a low duty cycle ratio to the switching element; increasing the duty cycle ratio in time so that the rotational speed of said armature may gradually be increased during startup; and optionally turning the switching element into closed circuit state once the switching element reaches 100% duty cycle ratio.

### OBJECTS OF THE PRESENT INVENTION

The primary object of the present invention is to eliminate the drawbacks outlined in the background of the invention.

Another object of the present invention is to provide a DC motor which is able to start gradually.

Another object of the present invention is to provide a DC motor whose gradual start up function is not affected from the temperature.

### BRIEF DESCRIPTIONS OF THE DRAWINGS

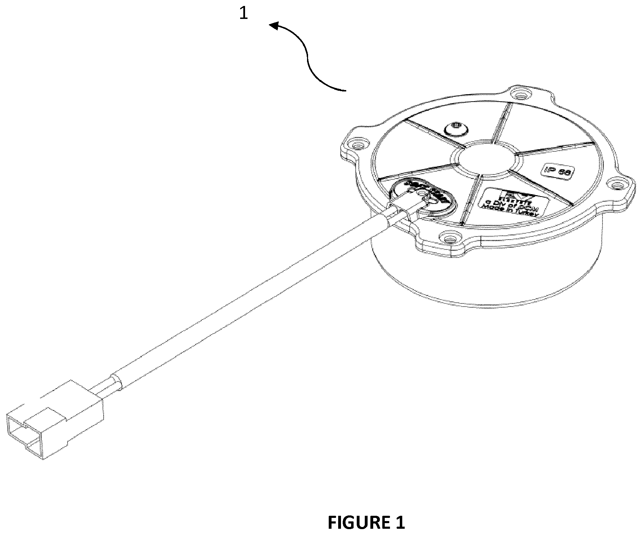

Fig. 1 shows a perspective view of the DC electric motor according to the present invention.

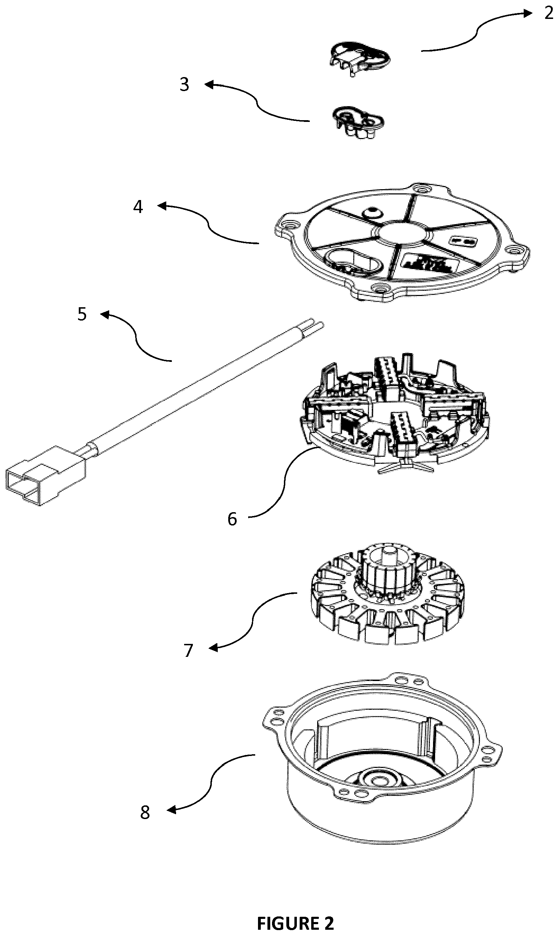

Fig. 2 shows an exploded view of the DC electric motor according to the present invention.

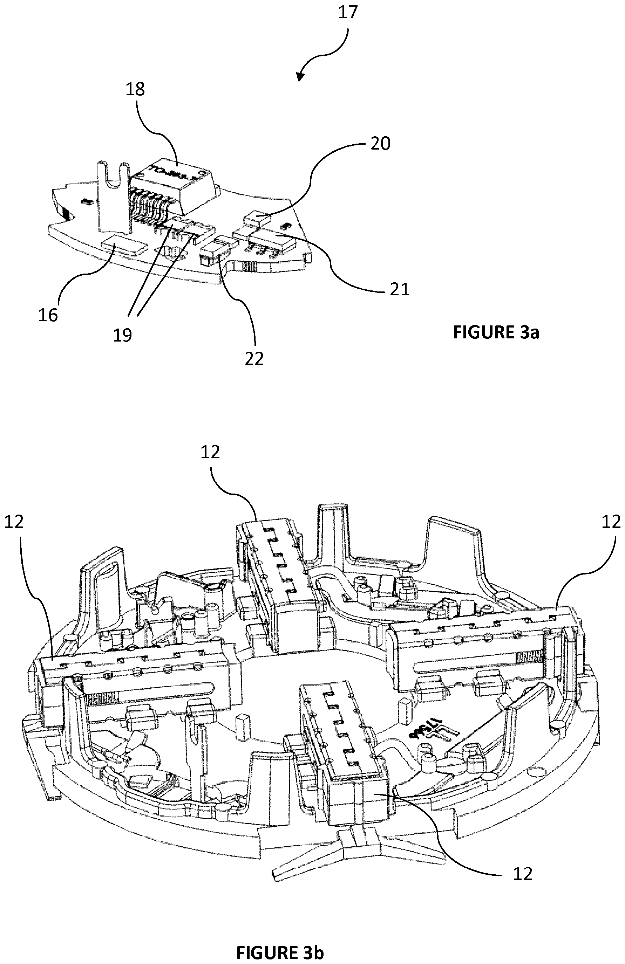

Fig. 3a shows a perspective view of the electronic control circuit according to the present invention.
Fig. 3b shows a perspective view of the holding member according to the present invention.
Fig. 4 shows another perspective view of the holding member with the electronic control circuit according to a preferred embodiment of the present invention.
Fig. 5 shows the circuit diagram.

### DETAILED DESCRIPTION OF THE INVENTION

Hereinafter, preferred embodiments of the present invention will be described in detail with reference to the accompanying drawings which are given solely for the purpose of exemplifying embodiments according to the present invention. The list of reference numerals used in the appended drawings is as follows;

### Reference Numerals of the Invention

1. DC electric motor
2. Cable outlet cap
3. Terminal outlet cap
4. Cover
5. Power transmission member
6. Holding member
7. Armature
8. Housing
10. Terminals
12. Brush slot
16. Ripple absorbing component
17. Electronic control circuit
18. Switching element
19. Protecting diodes
20. Processor
21. Voltage regulating component
22. Inverse voltage protection diode

A DC motor (1) according to the present invention comprises a housing (8) and an armature (7) which is rotatably located in said housing (8). Said DC electric motor (1) has an electronic control circuit (17) comprising a switching element (18) and a processor (20) in communication with said switching element (18) which is adapted to execute commands received from said processor (20). The processor (20) is adapted to apply a high frequency signal with a low duty cycle ratio to said switching element (18). Said processor (20) is also adapted to adjust the duty cycle ratio in time such that the rotational speed of said armature (7) may gradually be increased during startup of the DC electric motor (1).

Said switching element (18) is preferably a semiconductor switching component, and more preferably a MOSFET. Also the switching element (18) may be employed as a DC chopper.

Advantageously, the soft-starting characteristic of the DC electric motor (1) according to the present invention will not be affected from the operation time or the temperature of the DC motor since the present invention eliminates the use of a temperature dependent component, such as a NTC thermistor.

In the electronic circuit, driving the DC electric motor (1) of the present invention, use of a bypass circuitry, NTC thermistor or current limiting resistors for limiting inrush currents is not required. The system is fully digital and controllable and the starting current is software-controlled.

According to a preferred embodiment of the invention, said electronic control circuit (17) is embedded within the housing (8).

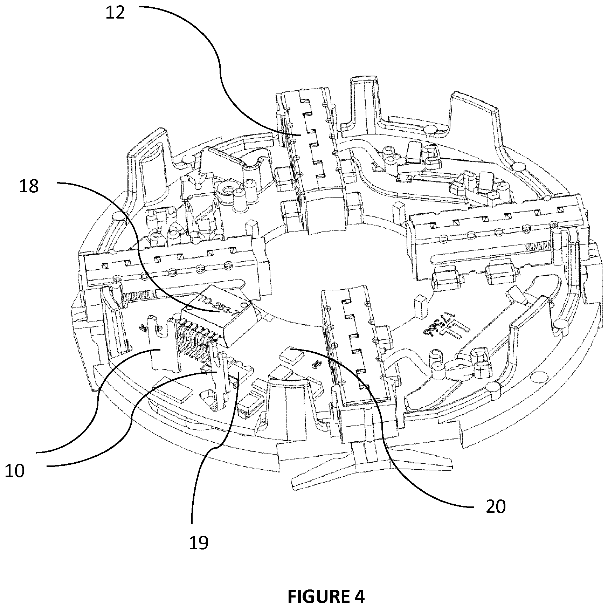

Electronic control circuit (17) of the present invention is preferably an internal element as shown in Fig. 4, thus it is possible to apply said electronic control circuit (17) in any DC electric motor, which may be a brushed DC electric motor, without encountering any possible incompatibility problem.

According to an embodiment of the present invention, the electronic control circuit (17) comprises one or more protecting diodes (19) for protecting the DC electric motor (1) and a bobbin (not shown) against high voltages generated by back-emf. Said protecting diodes (19) may be, but not limited to, Zener or Schottky diodes.

Said electronic control circuit (17) may further comprise at least one ripple absorbing component (16) for protecting said electronic control circuit (17) and the parts thereof against possible damages which may be caused by spikes occurring on the current applied to the armature (7). The ripple absorbing component (16) disclosed herein may be selected from any known ripple absorbing components of the prior art. However, optionally said ripple absorbing component (16) of the present invention is a varistor.

The switching element (18) of the present invention is in electrical connection in between the cathode of the DC electric motor (1) and the cathode of the power supply in series. Also the power supply layer of the electronic control circuit (17) is connected to the anode terminal and to the cathode terminal of the power supply.

According to an embodiment of the present invention, DC electric motor (1) further comprises one or more power transmission member (5); a holding member (6) and a cover (4) that is arranged as a closure for the DC electric motor (1). Said cover (4) comprises a terminal outlet cap (3) and a cable outlet cap (2). Said holding member (6) comprises a plurality of brush slots (12), optionally a terminal (10) and the electronic control circuit (17) which includes a voltage regulating component (21), an inverse voltage protection diode (22), a ripple absorbing component (16), preferably two protecting diodes (19) and a terminal (10) in addition to said processor (20) and said semiconductor switching element (18). According to this embodiment, the electronic control circuit (17) is preferably positioned between any of two adjacent brush slots (12) which are in connection with the holding member (6), as shown in Fig. 4. However said components disclosed above may vary according to desired functions of the DC electric motor (1) as well as the location of the electronic control circuit (17).

According to a preferred embodiment of the present invention, the electronic control circuit (17) further comprises a voltage regulating component (21) for ensuring nominal voltage feed to the processor (20). Optionally, the electronic control circuit (17) further comprises at least one inverse voltage protection diode (22) that is in electrical connection in between the positive terminal of a power supply and the voltage regulating component (21), for protecting the circuitry against voltage abnormalities.

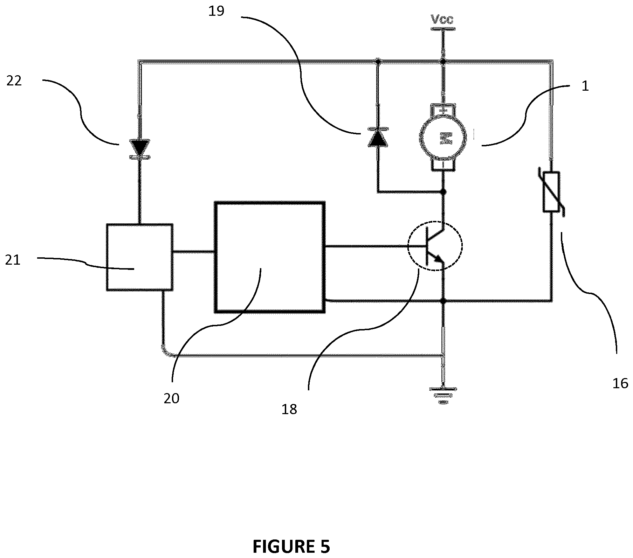

According to the present invention, the switching element (18), the protecting diodes (19) and the inverse voltage protection diode (22) is located as to be adjacent to each other, as shown in Fig. 5, while the voltage regulating component (21) and the processor (20) might be positioned to a different location. Here, the mentioned diodes may be Zener diodes.

The electronic control circuit (17) is controlled by the processor (20) which is controlled by software with the help of PWM (Pulse Width Modulation). In an alternative embodiment, an OP-AMP (Operational Amplifier) might be preferred instead of the processor (20). Optionally, the switching element (18) therein is used as a DC chopper and said switching element (18) is preferably a transistor; more preferably is a MOSFET (Metal Oxide Semiconductor Field Effect Transistor) yet the switching element (18) herein can be a FET (Field Effect Transistor), BJT (Bipolar Junction Transistor) or other known transistors. A step-down convertor also could be used instead of the DC chopper circuit if required.

According to a preferred embodiment of the present invention, the DC electric motor (1) disclosed herein is a brushed DC electric motor and the in-rush current that is supplied to said motor (1) is controlled by an electronic circuit having a processor, which may be a software controlled microprocessor, microcontroller, chip or microchip.

The disclosed voltage regulating component (21) may be IC (Integrated Circuit). However, alternative embodiments may also be used, such as bridge circuits or diodes (including Zener, Schottky and other diodes known in the prior art).

The DC motor comprises external power transmission members (5) that are connected to the terminal(s) (10) to energize the DC electric motor (1) and thus the electronic control circuit (17).

The electronic control circuit (17) is adapted to adjust the PWM (Pulse Width Modulation) ratio by means of the processor (20) which has a predetermined operating ratio and adapted to be operated when a voltage within the operating range thereof is supplied,

The DC electric motor (1) of the present invention is controlled with a process comprising the steps of;
- establishing electric communication in between a switching element (18) and a processor (20) such that the switching element (18) is able to execute commands received from the processor (20),
- applying, via the processor (20), a high frequency signal with a low duty cycle ratio to the switching element (18),
- increasing the duty cycle ratio in time so that the rotational speed of said armature (7) may gradually be increased during startup,
- optionally, turning the switching element (18) into closed circuit state once the switching element (18) reaches 100% duty cycle ratio.

## Claims

1. A DC electric motor (1) having a housing (8) and an armature (7) rotatably located in said housing (8), said motor having an electronic control circuit (17) comprising a switching element (18) and a processor (20) in communication with said switching element (18), said switching element (18) being adapted to execute commands received from said processor (20) **characterized in that** the processor (20) is adapted to apply a high frequency signal with a low duty cycle ratio to said switching element (18) and **in that** the processor (20) is adapted to adjust the duty cycle ratio in time such that the rotational speed of said armature (7) may gradually be increased during startup of the DC motor.

2. A DC electric motor (1) as claimed in Claim 1 wherein the electronic control circuit (17) is embedded within the housing (8).

3. A DC electric motor (1) as claimed in Claim 1 wherein the electronic control circuit (17) comprises one or more protecting diodes (19) for protecting the DC electric motor (1) from high voltage generated by back-emf.

4. A DC electric motor (1) as claimed in Claim 1 wherein the electronic control circuit (17) comprises at least one ripple absorbing component (16) for protecting the electronic control circuit (17) against possible damages which may be generated by spikes occurring on the current applied to the armature (7).

5. A DC electric motor (1) according to Claim 4 wherein the ripple absorbing component (16) is a varistor.

6. A DC electric motor (1) according to Claim 1 wherein the switching element (18) is in electrical connection in between the cathode of the DC electric motor (1) and the cathode of the power supply in series.

7. A DC electric motor (1) according to Claim 1 wherein the switching element (18) is a semiconductor switching component.

8. A DC electric motor (1) according to Claim 7 wherein the switching element (18) is a MOSFET.

9. A DC electric motor (1) according to Claim 1 wherein the switching element (18) is employed as a DC chopper.

10. A DC electric motor (1) according to Claim 1 wherein the electronic control circuit (17) further comprises a voltage regulating component (21) for ensuring nominal voltage feed to the processor (20).

11. A DC electric motor (1) according to Claim 10 wherein the electronic control circuit (17) further comprises at least one inverse voltage protection diode (22) that is in electrical connection in between the positive terminal of a power supply and the voltage regulating component (21).

12. A DC electric motor (1) according to Claim 11 wherein the electronic control circuit (17) thereof comprises an inverse voltage protection diode (22) for protecting the circuitry against voltage abnormalities.

13. A process for controlling the DC electric motor (1) comprising the steps of;
• establishing electric communication in between a switching element (18) and a processor (20) such that the switching element (18) is able to execute commands received from the processor (20),
• applying, via the processor (20), a high frequency signal with a low duty cycle ratio to the switching element (18),
• increasing the duty cycle ratio in time so that the rotational speed of said armature (7) may gradually be increased during startup,
• optionally, turning the switching element (18) into closed circuit state once the switching element (18) reaches 100% duty cycle ratio.
